# EUROPEAN PATENT APPLICATION

(11) **EP 1 313 003 A1**
(43) Date of publication of application: **21.05.2003**
(21) Application number: 00969977.8
(22) Date of filing: 23.10.2000
(51) Int. Cl.: G06F 3/12

(54) **PRINTER CONTROL METHOD, PRINTER CONTROL SYSTEM AND DEDICATED CONNECTION DEVICE**

(30) Priority: 09.06.2000 WO PCT/JP00/03756
(71) Applicant: Kobayashi Kirokushi Cp., Ltd., Kariya-shi, Aichi 448-8656 (JP)
(72) Inventor: HAMAJIMA, Hisanaga, Kobayashi Kirokushi Co., Ltd, Kariya-shi, Aichi 448-8656 (JP)
(74) Representative: Hengelhaupt, Jürgen, Dipl.-Ing.
(86) International application number: JP0007365
(87) International publication number: WO01095086

(57) **Abstract**

A print method, a print control system and a dedicated connection device are provided in which a printer (440) connected over an intranet (400) is used to produce quality printout in a fixed form using WWW of the Internet while ensuring the security of the intranet (400). A WWW browser (422) of a client (420) of an intranet (400) is used to send print information on a WWW Server (200) of the Internet (100) to a printer (440) of the intranet (400) through a dedicated connection device (430).

A print method, a print control system and a dedicated connection device are provided in which quality printout in a fixed form can be printed from a printer (440) on an intranet (400) by using WWW of Internet (100) while achieving the security of the intranet (400). print information of a WWW server (200) on the Internet (100) is transferred to and is printed by the printer (440) on the intranet (400) through the dedicated connection device (430) by using the WWW browser (422) of the client (420) on the intranet (400).

## Description

### Technical Field

The present invention relates to a print control method, print control system and a dedicated connection device for performing desired printing by using World Wide Web (WWW) of the Internet, and, in particular, to a print control method, a print control system and a dedicated connection device for producing quality printout in a fixed form.

### Background Art

According to conventionally known print methods of print information in a WWW server over the Internet by using a printer over an intranet connecting to the Internet,
(1) a specific program is registered with a printer over the intranet in advance, and the printer over the intranet downloads information from the WWW server over the Internet. Then, the information is printed by the specific program (hereinafter, a first method);
(2) printing is performed in accordance with print information downloaded from the WWW server over the Internet by using a print function of a WWW browser such as Internet Explore (hereinafter, a second method); and
(3) A global IP address is given to a printer of the intranet, and the printer of the intranet is caused to print directly in response to an access from the WWW server of the Internet (hereinafter, a third method).

However, the first method requires installing the specific program in the printer of the intranet from a client of the intranet. In addition, a client operating system (OS) is limited for installing the specific program in the printer of the intranet.

The second method cannot print on a standard-sized report and the like finely since the print function of the WWW browser is used.

The third method has a security problem since the intranet itself to which the printer is connected must be open to public over the internet.

Generally, in this kind of Intranet, a protection system called firewall is provided between the intranet and the Internet due to the security problem. However, with the firewall, the third method cannot be implemented, while the security cannot be ensured without the firewall.

### Disclosure of Invention

It is an object of the present invention to allow a desired matter to be printed from a printer of an intranet by using Internet WWW while achieving the security of the intranet.

It is another object of the present invention to provide a print control method, which allows quality printout in a fixed form to be produced from a printer of an intranet by using Internet WWW.

It is another object of the present invention to provide a print control system, which allows quality printout in a fixed form to be produced from a printer of an intranet by using the Internet WWW.

It is another object of the present invention to provide a dedicated connection device, which allows quality printout in a fixed form to be produced from a printer of an intranet by using the Internet WWW.

A print control method according to the present invention, for printing print information of a WWW server of the Internet by using a printer of an intranet connected to the Internet through a firewall, includes the steps of capturing print information of a WWW server of the Internet to a client of the intranet through the firewall, and transferring the print information captured by the client to the printer of the intranet through a dedicated connection device.

In this case, the print information is information for printing in a printer and includes control information and typing information.

The control information includes commands different for each type of printer for controlling how the printer itself is operated. For example, a size of paper to be printed and/or a cut position of paper may be defined. Whether a printer is available or not can be checked.

The typing information includes a content, that is, characters, lines and so on written in ASCII format, which is actually typed by the printer by being combined with the control information.

The print information can be stored in any form. Therefore, the print information may exist on a hard disk or a memory (RAM) of a personal computer, a server or the like.

With this construction, print information of a WWW server of the Internet is captured to a client on an intranet first. Then, the print information is transferred to a printer of the intranet through a dedicated connection device. Thus, even when a firewall is provided between the Internet including the WWW server and the intranet including the printer, printing can be performed by the printer of the intranet based on the print information of the WWW server of the Internet. In addition, since the print information is transferred through the dedicated connection device, a quality printout in a fixed form can be produced much finely.

In this construction, the dedicated connection device captures the print information from the client by connecting to the client over the intranet and communicating with the client, and the captured print information is command-converted by using command-conversion information stored in advance and is sent to the printer.

Here, the dedicated connection device may transfer the command-converted print information to the printer through a parallel port.

The dedicated connection device may transfer the command-converted print information through a serial port.

The WWW server may provide a WWW content to the client. The client may enter a key item for searching a database of the WWW server by using the WWW server content provided from the WWW server and transfer the key item to the WWW server. The WWW server may searches the database of the WWW server based on the transferred key item and obtains desired information. The WWW server may combine the obtained information and printer control information stored in advance to create print information and transfer the print information to the client. The client may transfer print information transferred from the WWW server to the dedicated connection device. The dedicated connection device may perform command-conversion processing on the print information and transfer it to the printer.

In other words, the client can input a key item for searching a database of the WWW server by using a WWW content provided from the WWW server dynamically. Therefore, a predetermined program does not have to be installed in advance.

Here, the security for the uses of the WWW server can be ensured when an input of the key item for searching the database of the WWW server in the client is authorized if a user ID and a keyword are properly input.

The WWW server may supply identification information of the dedicated connection device when transferring the print information to the client. The client may transfer the print information transferred from the WWW server to the dedicated connection device based on the identification information of the dedicated connection device.

With this construction, the print information transferred from the WWW server can be transferred to the dedicated connection device automatically.

A print control method according to the present invention, for printing print information of a WWW server of the Internet by using a printer of an intranet connected to the Internet through a firewall, includes the steps of capturing address information of print information of a WWW server of the Internet to a client of the intranet through the firewall, and notifying the address information of the print information captured to the client to a dedicated connection device. In this case, the dedicated connection device downloads the print information from the WWW server based on the address information of the print information notified by the client and transfers the print information to a printer of the intranet.

Here, the dedicated connection device may capture the print information from the client by connecting to the client over the intranet to communicate with the client and command converts the print information downloaded from the WWW server by using command-conversion information stored in advance and transfers it to the printer.

The dedicated connection device may transfer the command-converted print information through a parallel port.

The dedicated connection device may transfer the command-converted print information through a serial port.

The WWW server may provide a WWW content to the client. The client may input a key item for searching a database of the WWW server by using the WWW content provided from the WWW server and transfers the key item to the WWW server. The WWW server may search the database of the WWW server based on the transferred key item and obtains desired information. The WWW server may combine the obtained information and printer control information stored in advance to create print information and transfer the address information of the print information to the client. The client may notify the address information of the print information transferred from the WWW server to the dedicated connection device. The dedicated connection device may download the print information from the WWW server based on the address information of the print information, which is notified from the client, perform command-conversion processing on the print information and transfer it to the printer.

Here, the security for the uses of the WWW server can be ensured when an input of the key item for searching the database of the WWW server in the client is authorized if a user ID and a keyword are properly input.

The WWW server may supply identification information of the dedicated connection device when transferring the address information of the print information to the client. The client may transfer the address information of the print information transferred from the WWW server to the dedicated connection device based on the identification information of the dedicated connection device.

A print control system according to the present invention, for printing print information of a WWW server of the Internet by using a printer of an intranet connected to the Internet through a firewall, includes a client connected to the intranet for capturing print information of the WWW server through the firewall, and a dedicated connection device transferring the print information captured by the client to the printer of the intranet.

With this construction, a print control system, which allows quality printout in a fixed form to be produced by using the Internet WWW while ensuring the security.

The dedicated connection device may have an intranet connection unit for connecting to the client over the intranet, a communication unit for communicating with the client through the intranet connection means, a storage unit for storing the print information transferred from the client, a command-conversion information storage unit for storing command-conversion information for converting the command of the print information, a command-conversion processing unit for converting the command of the print information by using the command-conversion information stored in the command-conversion information storage unit, and a transfer unit for transferring the print information command-converted by the command-conversion processing unit to the printer.

Here, the transfer unit may have a parallel port for transferring print information command-converted by the command-conversion processing unit to the printer or a serial port for transferring print information command-converted by the command-conversion processing unit to the printer.

The client may have a key item input unit for inputting a key item for searching a database of the WWW server by using a WW content provided from the WWW server, a key item transfer unit for transferring the key item for searching the database of the WWW server input by the key item input unit to the WWW server, a print information storage unit for storing print information transferred from the WWW server, and a print information transfer unit for transferring print information stored in the print information storage unit to the dedicated connection device.

Here, the key item input unit may authorize an input of the key item if a user ID and a keyword are input properly.

The WWW server may have a content supply unit for supplying a WWW content to the client, a database for storing and managing desired information, a information searching unit for searching the database based on a key item transferred from the client to obtain desired information, information storage unit for storing information searched and obtained by the information searching unit, a printer control information storage unit for storing predetermined printer control information in advance, a print information creating unit for combining information stored in the information storage unit and the printer control information stored in the printer control information storage unit to create print information, a print information storage unit for storing the print information created by the print information creating unit, and a print information transfer unit for transferring the print information stored in the print information storage unit to the client.

Here, the print information transfer unit may transfer identification information of the dedicated connection device to the client along with the print information.

A print control system according to the present invention, for printing print information of a WWW server of the Internet by using a printer of an intranet connoted to the Internet through a firewall, includes a client connected to the intranet for capturing address information of the print information of the WWW server through the firewall, and a dedicated connection device connected to the intranet for being notified the address information of the print information of the WWW server from the client, for downloading the print information from the WWW server based on the notified address information, and for transferring the print information to the printer.

Here, the dedicated connection device may have an intranet connection unit for connecting to the client through the intranet, a communication unit for communicating with the client through the intranet connection unit, a storage unit for downloading and storing the print information from the WWW server based on the address information of the print information transferred from the client, a command-conversion information storage unit for storing command-conversion information for converting a command of the print information, a command-conversion processing unit for converting the command of the print information by using the command-conversion information stored in the command-conversion information storage unit, and a transfer unit for transferring the print information command-converted by the command-conversion processing unit to the printer.

The transfer unit may have a parallel port for transferring the print information command-converted by the command-conversion processing unit to the printer or a serial port for transferring the print information command-converted by the command-conversion processing unit to the printer.

The client may have a key item input unit for inputting a key item for searching a database of the WWW server by using a WWW content provided from the WWW server, a key item transfer unit for transferring the key item for searching the database of the WWW server, which is input by using the key item input unit, to the WWW server, an address information storage unit for storing address information of the print information transferred from the WWW server, and a notification unit for notifying the address information stored in the address information storage unit to the dedicated connection device.

Here, the key item input unit may authorize an input of the key item if a usr ID and a keyword are input properly.

The WWW server may have a content supply unit for supplying a WWW content to the client, a database for storing and managing desired information, an information search unit for searching the database based on the key item transferred from the client and for obtaining desired information, an information storage unit for storing information searched and obtained by the information search unit, a printer control information storage unit for storing predetermined printer control information in advance, a print information creating unit for combining information stored in the information storage unit and printer control information stored in the printer control information storage unit to create print information, a print information storage unit for storing print information created by the print information creating unit, and an address information transfer unit for transferring address information of the print information stored in the print information storage unit to the client.

Here, the address information transfer unit may transfer identification information of the dedicated connection device to the client along with the address information.

A dedicated connection device according to the present invention, in a print control system for printing print information of a WWW server of the Internet by using a printer of an intranet connected to the Internet through a firewall, includes an intranet connection unit for connecting to the client over the intranet, a communication unit for communicating with the client through the intranet connection unit, a storage unit for storing the print information transferred from the client, a command-conversion information storage unit for storing command-conversion information for converting a command of the print information, a command-conversion processing unit for converting the command of the print information by using command-conversion information stored in the command-conversion information storage unit, and a transfer unit for transferring print information command-converted by the command-conversion processing unit to the printer.

Here, the transfer unit may have a parallel port for transferring the print information command-converted by the command-conversion processing unit to the printer or a serial port for transferring the print information command-converted by the command-conversion processing unit to the printer.

A dedicated connection device according to the present invention, in a print control system for printing print information of a WWW server of the Internet by using a printer of an intranet connected to the Internet through a firewall, includes an intranet connection unit for connecting to the client through the intranet, a communication unit for communicating with the client through the intranet connection unit, a storage unit for downloading and storing the print information from the WWW server based on address information of the print information transferred from the client, a command-conversion information storage unit for storing command-conversion information for converting a command of the print information, a command-conversion processing unit for converting the command of the print information by using the command-conversion information stored in the command-conversion information storage unit, and a transfer unit for transferring print information command-converted by the command-conversion processing unit to the printer.

Here, the transfer unit may have a parallel port for transferring the print information command-converted by the command-conversion processing unit to the printer or a serial port for transferring the print information command-converted by the command-conversion processing unit to the printer.

### Brief Description of the Drawings

Fig. 1 is a block diagram showing a schematic construction of a print control system to which a print control method according to the present invention is applied;
Fig. 2 is a block diagram showing a detail construction of a first embodiment of a dedicated connection device shown in Fig. 1;
Fig. 3 is a diagram showing a processing flow between a WWW server of the Internet and a client on an intranet when the dedicated connection device shown in Fig. 2 is used;
Fig. 4 is a diagram showing a processing flow for sending print information, which is obtained from a WWW server, from the client on an Intranet to a printer when the dedicated connection device shown in Fig. 2 is used;
Fig. 5 is a block diagram showing a detail construction of a second embodiment of the dedicated connection device sho2n in Fig. 1;
Fig. 6 is a diagram showing a processing flow between a WWW server of the Internet and a client over an Intranet when a dedicated connection device shown in Fig. 5 is used;
Fig. 7 is a diagram showing a processing from the client of the intranet to a printer when the dedicated connection device shown in Fig. 5 is used.
Fig. 8 is a diagram for explaining processing by the WWW server when a matter printed by the printer shown in Fig. 1 is an order form for a specific wholesaler;
Fig. 9 is a diagram showing a screen for entering a user ID and a password displayed in a client in the construction shown in Fig. 8; and
Fig. 10 is a diagram for explaining processing by a client when a matter printed by the printer shown in Fig. 1 is an order form for a specific wholesaler.

### Best Mode for Carrying Out the Invention

Embodiments of a print control method, print control system and a dedicated connection device according to the present invention will be described below in detail with respect to attached drawings.

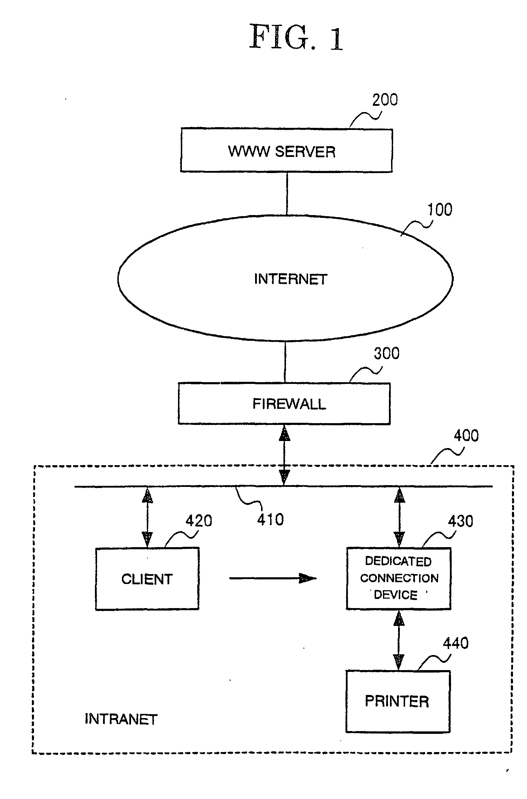

Fig. 1 is a block diagram showing a schematic construction of a print control system to which the print control method according to the present invention is applied.

In Fig. 1, the print control system is implemented by connecting an intranet 400 to the Internet 100 through a firewall 300.

Here, a WWW server 200 holding print information according to the present invention is connected onto the Internet 100.

In the intranet 400, a client 420 and a dedicated connection device 430 including a main part of the present invention are connected to a local area network (LAN) 400. A printer 440 for printing print information held by a WWW server 200 on the Internet 100 is connected to the dedicated connection device 430.

Here, according to the print control system, the printer 440 on the intranet 400 can print even a quality printout in a fixed form with security based on print information held by the WWW server 200 on the Internet 100.

Thus, in a first embodiment of the present invention, the print information in the WWW server 200 on the Internet 100 is captured to the client 420 on the intranet 400 through the firewall 300 first of all. Then, the print information captured to the client 420 is transferred to the printer 440 on the intranet 400 through the dedicated connection device 430.

In this case, the WWW server 200 is connected to the Internet 100 and has a function for providing a WWW page.

The client 420 is a terminal device connecting to the Internet 100 in a certain manner and can receive a service provided by the WWW server 200.

The client 420 generally connects to the Internet 100 by user's manipulation to retrieve information from the WWW server 200 on the Internet 100 or to write information to the WWW server 200 on the Internet 100.

More specifically, the client 420 can connect to the Internet 100 through the firewall 300 by dial-up connection, for example, and can access the WWW server 200 on the Internet 100. For example, the client 420 may be a personal computer storing a WWW browser such as Internet Explore.

The dedicated connection device 430 has at least one connector for connecting to the LAN 410, at least one serial port and at least one parallel port. The dedicated connection device 430 can convert information received from the LAN 410 to serial port pr parallel port information and send the converted information to the printer 440.

According to a second embodiment of the present invention, address information of print information in the WWW server 200 on the Internet 100 is captured into the client 420 on the intranet 400 through the firewall 300. After that, the client 420 notifies the captured address information of the print information in the WWW server 200 to the dedicated connection device 430. The dedicated connection device 430 downloads the print information from the WWW server 200 based on the notified address information of the print information and transfers the print information to the printer 440 on the intranet.

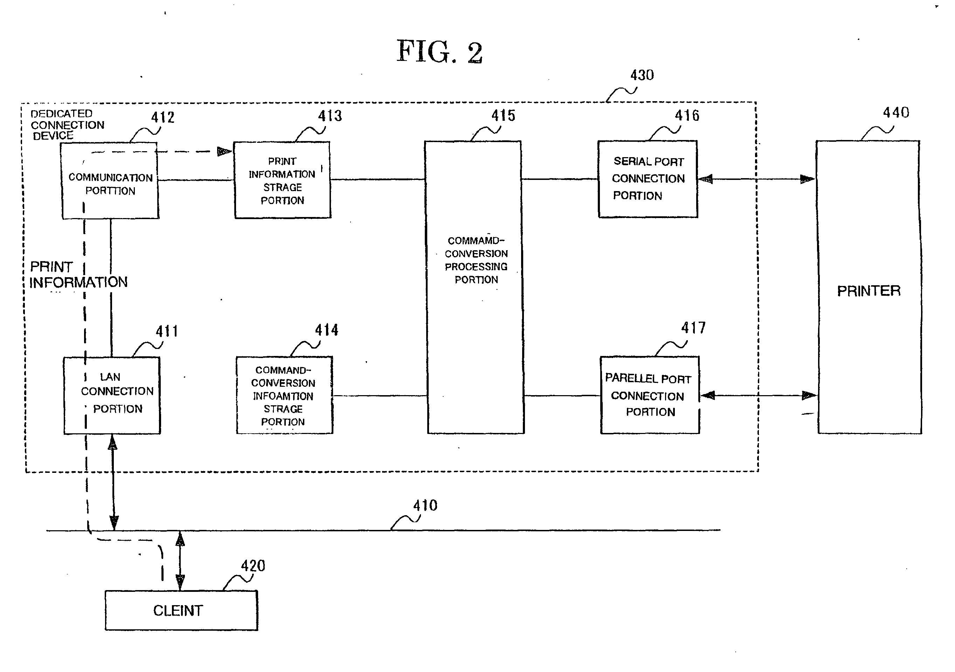

Fig. 2 is a block diagram showing a detail construction of the dedicated connection device 430 according to the first embodiment described with reference to Fig. 1.

In Fig. 2, the dedicated connection device 430 includes a LAN connection portion 411, a communication portion 412, a print information storage portion 413, a command-conversion information storage portion 414, a command-conversion processing portion 415, a serial port connection portion 416 and a parallel port connection portion 417.

Here, the LAN connection portion 411 controls connection with the LAN (Ethernet) 410 included in the intranet 400 shown in Fig. 1.

The communication portion 412 communicates with the client 420 through the LAN connection portion 411 and the LAN 410 so that the client 420 can obtain print information received from the WWW server 200.

The print information obtained by the communication portion 412 from the client 420 is stored in the print information storage portion 413.

The command-conversion information storage portion 414 stores command-conversion information for converting a command in the print information stored in the print information storage portion 413 to the command for a serial interface or a parallel interface. Required command-conversion information is stored in the command-conversion information storage portion 414 in advance.

The command-conversion processing portion 415 performs command-conversion information processing for converting the command in the print information stored in the print information storage portion 413 by using the command-conversion information stored in the command-conversion information storage portion 414.

The print information having the command converted in the command-conversion processing portion 415 is transferred to the printer 440 through the serial portion connection portion 416 or the parallel port connection portion 417.

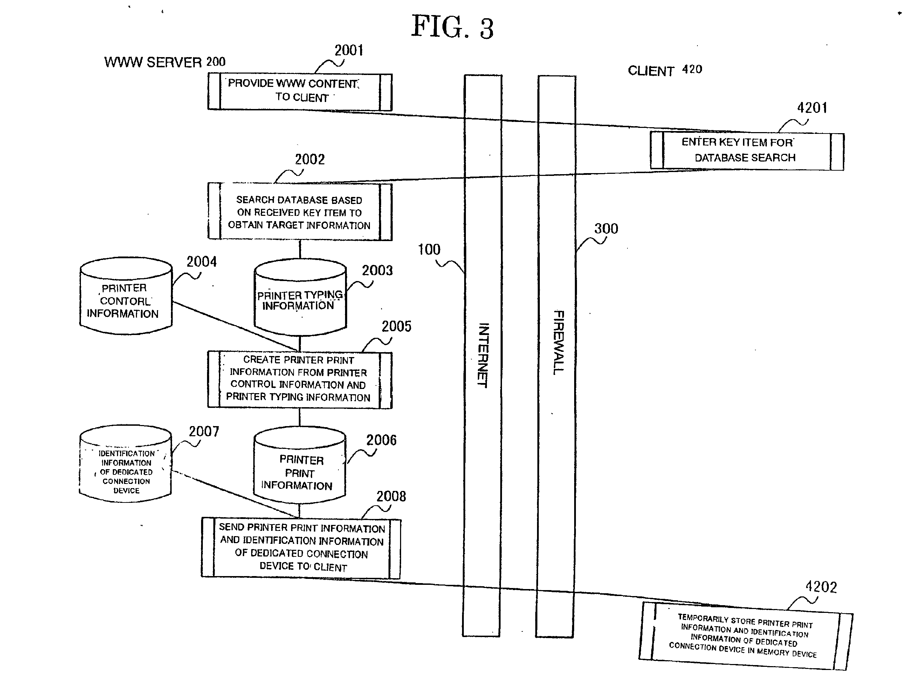

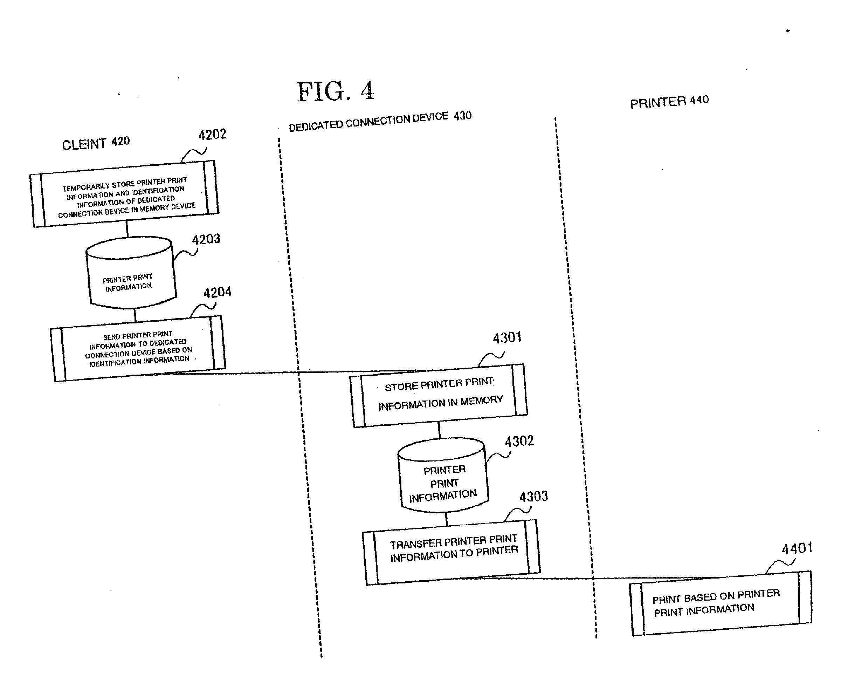

Next, a processing flow by the print control system according to the first embodiment will be described in detail with reference to Figs. 3 and 4.

Fig. 3 is a diagram showing a processing flow performed between the WWW server 200 on the Internet 100 and the client 420 on the intranet 400.

In Fig. 3, first of all, the WWW server 200 sends a WWW content to the client 420 on the intranet 400 through the Internet 100 and the firewall 300. Thus, the WWW contents can be provided to the client 420 (step 2001).

The WWW content is provided from the WWW server 200 to the client 420 by using a WWW browser accommodated in the client 420.

More specifically, by launching the WWW browser in the client 420 to access the WWW server 200 through the firewall 300 and over the Internet 100, the WWW content is sent from the WWW server 200 to the client 420. Thus, the WWW content is displayed on the WWW browser of the client 420.

As a result, the client 420 can be provided with the WWW content from the WWW server 200 without installing special software.

Next, in the client 420, a key item for a database search in the WWW server 200 is entered with respect to the WWW content displayed on the WW browser in the client 420 (step 4201).

Then, the key item for the database search entered on the WWW browser of the client 420 is sent to the WWW server 200 through the firewall 300 and over the Internet 100.

In the WWW server 200, the WWW server 200 is searched based on the key item for the database search sent from the client 420 to obtain target information, that is printer print information (step 2002).

The printer typing information obtained in the step 2002 is stored in the printer typing memory storage portion 2002 in the WWW server 200.

Next, in the WWW server 200, printer typing information is created by combining the printer print information stored in the printer print information storage portion 2003 in the WWW server 200 and the printer control information stored in the printer control information storage portion 2004 in the WWW server in advance (step 2005).

Here, the printer typing information is a content to be printed by the printer actually in combination with the control information, that is, information in ASCII format such as text and a line.

The printer control information includes commands different for every type of printer for controlling how the printer itself is operated. For example, with the printer control information, a size and/or a cut position of printing paper can be defined. Alternatively, whether the printer is available for printing or not may be checked.

The printer print information is used for printing by a printer. The printer print information includes the printer control information and printer typing information.

Printer control information corresponding to different kinds of printer is spread in advance in the printer control information storage portion 2004 of he WWW server 200.

The printer print information created at the step 2005 is stored in the printer print information memory portion 2006.

The printer print information stored in the printer print information memory portion 2006 is sent to the client 420 on the intranet 400 over the Internet 100 and thorough the firewall 300 along with identification information of the dedicated connection device 430, which is stored in advance in the identification information storage portion 2007 of the dedicated connection device (step 2008).

The client 420 temporally stores in a storage device of the client 420 the printer print information and the identification information of the dedicated connection device 430, which are sent from the WWW server 200 at the step 2008 (step 4202).

In the above processing, the steps 4201 and 4202 by the client 420 are performed on the WWW browser of the client 420. Special software in addition to the WWW browser is not required.

In other words, without installing special software, the client 420 can enter a key item for a database search based on software sent from the WWW server 200 automatically and can perform processing for storing printer print information and identification information of the dedicated connection device 430, which are sent from the WWW server 200.

Fig. 4 is a diagram showing a processing flow for sending the print information obtained from the WWW server 200 from the client 420 on the intranet 400 to the printer 440.

In Fig. 4, the printer print information and the identification information of the dedicated connection device 430, which are sent from the WWW server 200 at the step 4202 are temporally stored in the memory device of the client 420. After that, the printer print information is stored in the printer print information storage portion 4203 of the client 420.

Then, the print information stored in the printer print information memory portion 4203 is sent to the dedicated connection device 430 based on the identification information of the connection apparatus 430 stored at the step 4202 (step 4204).

The client 420 accesses software registered with the dedicated connection device 430 in advance so as to implement the step 4204.

In the dedicated connection device 430, the printer print information sent from the client 420 is stored in a memory, that is, in a printer print information memory portion 4302 (step 4301).

Then, the printer print information stored in the printer print information memory portion 4302 is transferred to the printer 440 (step 4303).

In the above-described processing flow, the printer print information memory portion 4302 corresponds to the print information storage portion 413 shown in Fig. 2. The printer print information is transferred to the printer 440 at the step 4303 by the construction of the dedicated connection device 430 shown in Fig. 2.

In other words, in the dedicated connection device 430 shown in Fig. 2, the printer print information sent from the client 420 is temporally stored in the print information storage portion 413 first of all. Next, a serial interface (serial port connection portion 416) or a parallel interface (parallel port connection portion 417) are launched and prepare for the communication with the printer 440.

Then, in the command-conversion processing portion 415, command-conversion processing is performed in which a command of the printer print information temporally stored in the print information storage portion 413 is converted to a serial interface or parallel interface command. The printer print information is transferred to the printer 440 through the serial port connection portion 416 or the parallel port connection portion 417.

The printer 440 performs desired printing outputting, that is, printing processing and paper cutting processing based on the printer print information transferred from the dedicated connection device 430 (step 4401).

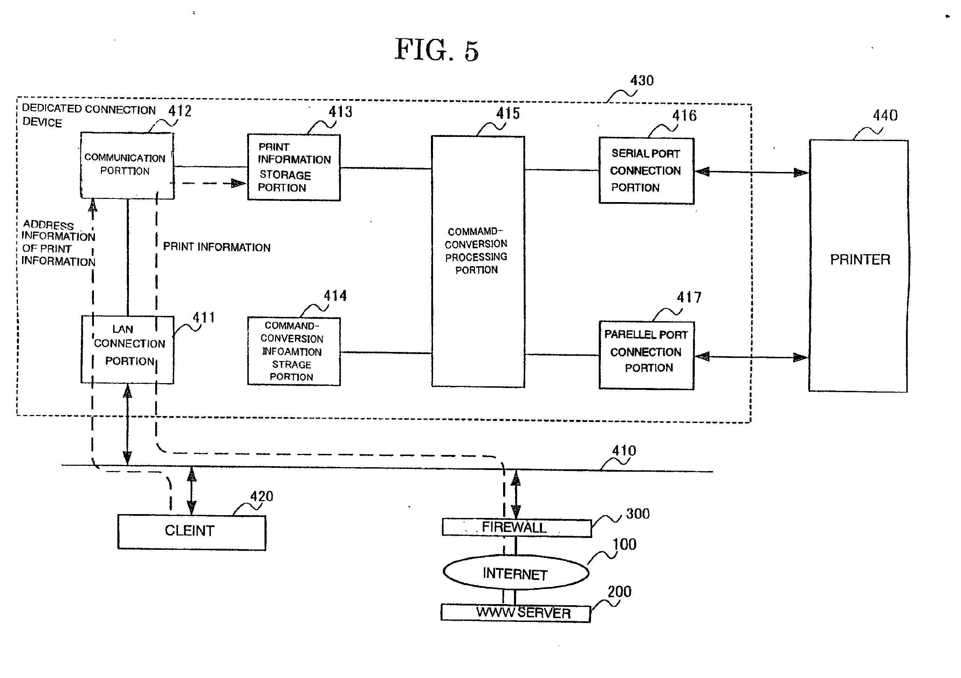

Fig. 5 is a block diagram showing a detail construction of the dedicated connection device 430 according to the second embodiment described with reference to Fig. 1.

In Fig. 5, like the dedicated connection device 430 shown in Fig. 2, the dedicated connection device 430 includes a LAN connection portion 411, a communication portion 412, a print information storage portion 413, a command-conversion information storage portion 414, a command-conversion processing portion 415, a serial port connection portion 416, and a parallel port connection portion 417. The processing by the communication portion 412 is different from the one shown in Fig. 2.

In the construction shown in Fig. 2, print information is sent from the client 420. On the other hand, in this embodiment, only address information of print information of the WWW server 200 is sent from the client 420. The real print information is downloaded from the WWW server 200 by the dedicated connection device 430 based on the address information and is transferred to the printer.

In other words, the communication portion 412 of the dedicated connection device 430 shown in Fig. 5 communicates with the client 420 through the LAN connection portion 411 and the LAN 410 first of all to be notified address information of the print information received by the client 420 from the WWW server 200.

The address information of the print information notified by the client 420 is temporally stored in the communication portion 412. After that, the communication portion 412 accesses the WWW server 200 through the LAN connection portion 411, the LAN 410, the firewall 300 and the Internet 100 based on the address information. Then, the communication portion 412 downloads print information corresponding to the address information from the WWW server 200.

The print information downloaded by the communication portion 412 is stored in the print information storage portion 413.

The subsequent steps are the same as those by the dedicated connection device 430 shown in Fig. 2.

That is, the command-conversion processing portion 415 performs command-conversion processing for converting a command of print information stored in the print information storage portion 413 by using command-conversion information stored in the command-conversion information storage portion 414. The print information having the converted command is transferred to the printer 440 through the serial port connection portion 416 or the parallel port connection portion 417.

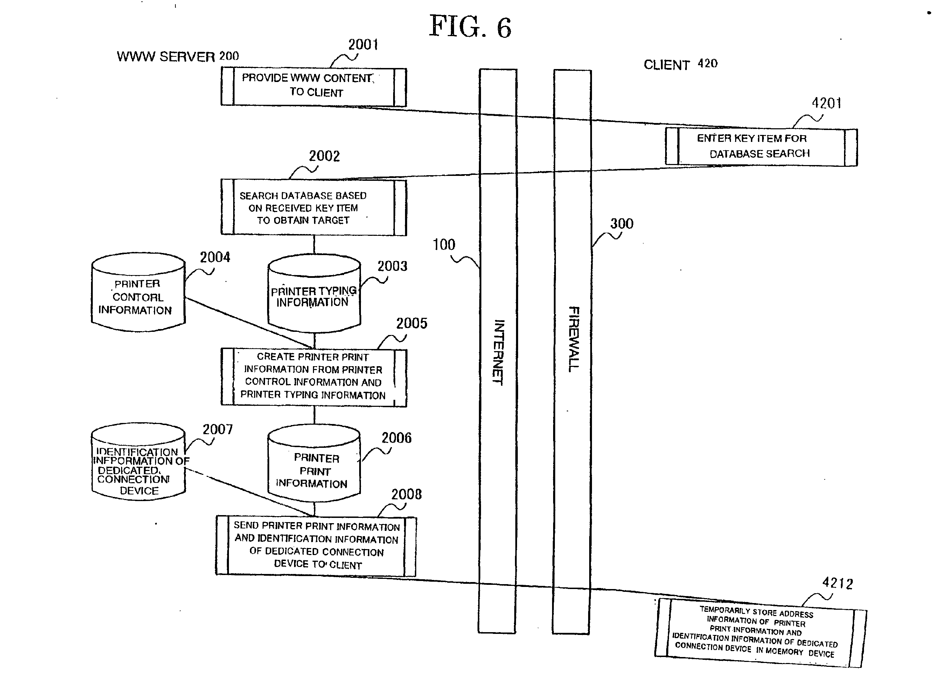

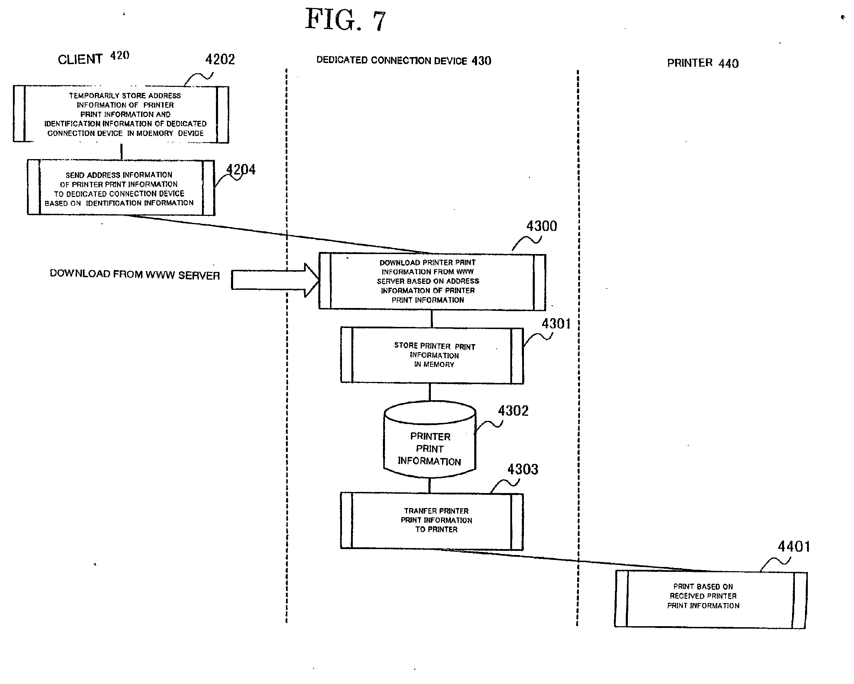

Next, a processing flow performed by the print control system according to the second embodiment will be described in detail with reference to Figs. 6 and 7.

Fig. 6 is a diagram showing a processing flow performed between the WWW server 200 on the Internet 100 and the client 420 on the intranet 400 according to the second embodiment.

The processing flow performed between the WWW server 200 on the Internet 100 and the client 420 on the intranet 400 shown in Fig. 6 is different from the processing flow shown in Fig. 3 in that information sent from the WWW server 200 to the client 420 is address information of printer print information of the WWW server 200 instead of the printer print information. The other processing flow is the same as the processing flow shown in Fig. 3.

In Fig. 6, the WWW server 200 sends a WWW content to the client 420 on the intranet 400 through the Internet 100 and the firewall 300, first of all. The WWW content is provided to the client 420 (step 2001). Thus, in the client 420, a key item for a database search in the WWW server 200 is entered with respect to the WWW content displayed on the WW browser in the client 420 (step 4201).

Then, the key item for the database search entered on the WWW browser of the client 420 is sent to the WWW server 200 through the firewall 300 and over the Internet 100. In the WWW server 200, the database of the WWW server 200 is searched based on the key item for the database search sent from the client 420 to obtain target information, that is, printer typing information (step 2002). The printer typing information obtained in the step 2002 is stored in the printer typing information memory portion 2003 in the WWW server 200.

Next, in the WWW server 200, printer print information is created by combining the printer typing information stored in the printer print information memory portion 2003 in the WWW server 200 and the printer control information stored in the printer control information memory portion 2004 in the WWW server 200 in advance (step 2005). The printer print information created at the step 2005 is stored in the printer print information memory portion 2006.

Then, address information of the printer print information stored in the printer print information memory portion 2006is sent to the client 420 on the intranet 400 over the Internet 100 and through the firewall 300 along with identification information of the dedicated connection device 430, which is stored in the identification information memory portion 2007 of the dedicated connection device in advance (step 2018).

The client 420 temporally stores the address information of the printer print information and the identification information of the dedicated connection device 430, which are sent from the WWW server 200 at the step 2008 in the memory device of the client 420 (step 4202).

Fig. 7 is a diagram showing a processing flow in which the dedicated connection device 430 on the intranet 400 downloads and sends printer print information corresponding to the address information from the WWW server 200 to the printer 440 based on the address information of the printer print information sent from the WWW server 200.

In Fig. 7, the client 420 temporally stores the address information of the printer print information and the identification information of the dedicated connection device 430, which are sent from the WWW server 200 at the step 4202. Then, based on the identification information of the dedicated connection device 430, the address information of the printer print information is sent to the dedicated connection device 430 (step 4204).

Based on the address information of the printer print information sent from the client 420, the dedicated connection device 430 accesses the WWW server 200 through the firewall 300 and over the Internet 100. Then, the printer print information corresponding to the address information is downloaded from the WWW server 200 (step 4300).

The printer print information downloaded at the step 4300 is stored in a printer print information memory portion 4302 (step 4301).

Then, the printer print information stored in the printer print information memory portion 4302 is transferred to the printer 440 (step 4303). The printer 440 performs desired printing output, that is, printing processing and paper cut processing based on the printer print information transferred from the dedicated connection device 430 (step 4401).

Next, a detail example of processing by the WWW server 200 and processing by the client 420 when a matter printed by the printer 440 on the intranet 400 is an order form for a specific wholesaler obtained from the WWW server 200 in the Internet 100.

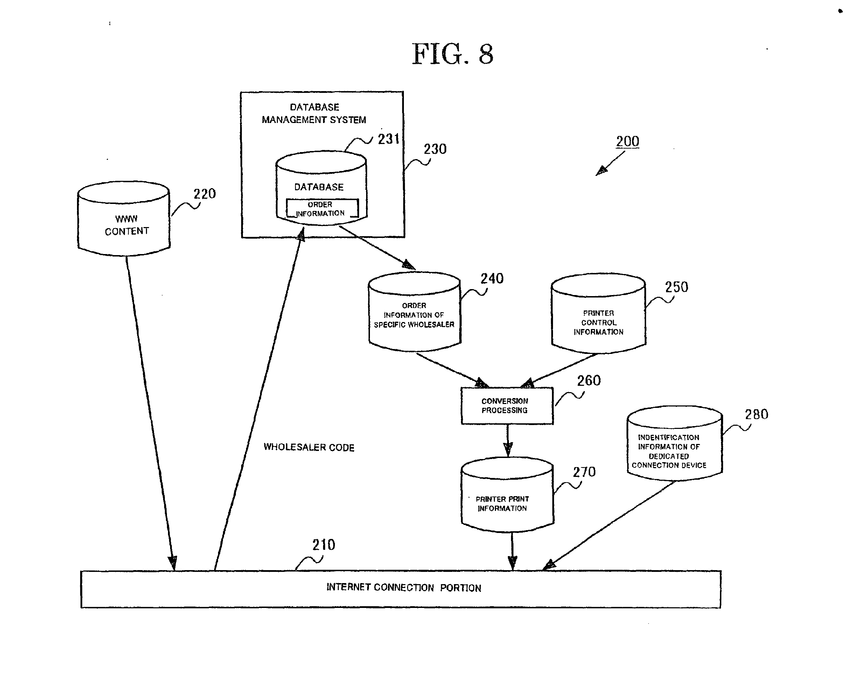

Fig. 8 is a diagram for describing processing by the WWW server 200 when a matter printed by the printer 440 is an order form for a specific wholesaler.

In Fig. 8, the WWW server 200 on the Internet 100 includes an Internet connection portion 210 for connecting to the Internet 100, a WWW content storage portion 220 for storing WWW contents for issuing an order form used by the WWW server 200, a data management system 230 having a database 231 for storing order information for issuing an order form, an order information storage portion 240 for a specific wholesaler for storing order information of a wholesaler retrieved from the database 231, a printer control information storage portion 250 for storing printer control information, conversion processing portion 260 for creating printer print information based on order information for a wholesaler stored in the order information storage portion 240 of the wholesaler and printer control information stored in the printer control information storage portion 250, a printer print information storage portion 270 for storing printer print information created by the conversion processing portion 260, and an identification information storage portion 280 of a dedicated connection device for storing identification information of the dedicated connection device 430.

Here, the WWW content storage portion 220, the database 231, the order information storage portion 240 of a specific wholesaler, the printer control information storage portion 250, the printer print information storage portion 270, and the identification information storage portion 280 of the dedicated connection device are established on a hard disk of the WWW server 200. A WWW content, order information on the database 231, order information for a specific wholesaler, printer control information, printer print information and identification information of the dedicated connection device 430 are managed on the hard disk by the WWW server 200.

In this construction, when an order form for a wholesaler is printed by the printer 440 on the intranet 400, a WWW content for issuing the order form by using the WWW server 200, which is stored in the WWW content storage portion 220 of the WWW server 200, is sent to the client 420 through the Internet connection portion 210 first.

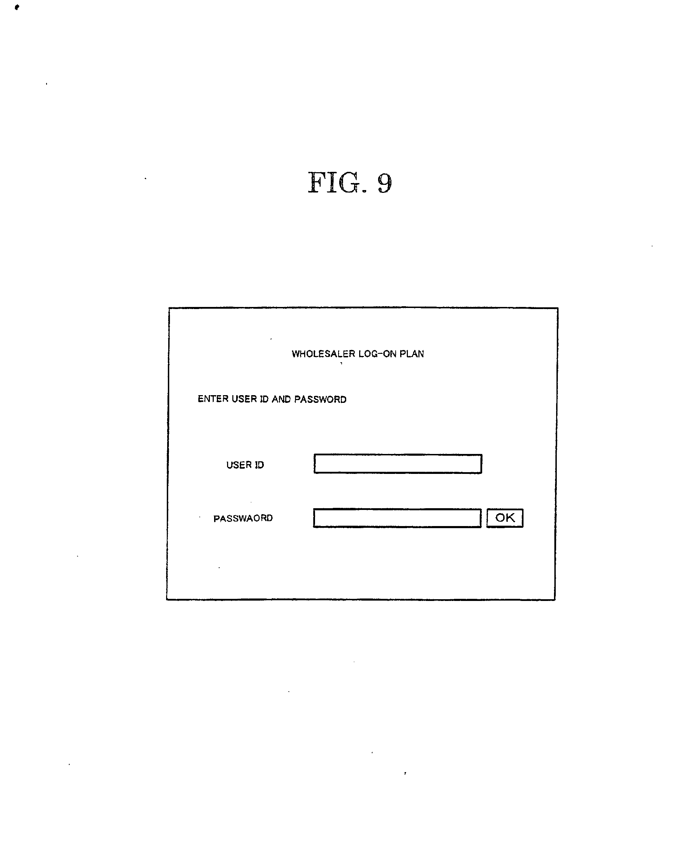

In this case, a screen for entering a user ID and a password as shown in Fig. 9 is displayed in the client 420.

A user manipulates an "OK" button on this input screen by entering the user ID and the password. Here, when the user ID and the password are valid, subsequent processing for issuing the order form for the specific wholesaler, that is print processing can be performed. Entering a user ID and a password can provide the security relating to the processing for issuing an order report for a specific wholesale by using a WWW server.

Next, a wholesaler code for the wholesaler to be used for the processing for issuing the order form of the specific wholesaler, which is sent from the client 420 through the Internet connection portion 210, is sent to the data management system 230.

The data management system 230 retrieves order information for the specific wholesaler from the database 231 based on the wholesaler code sent from the client 420. The retrieved order information for the specific wholesaler is stored in the order information storage portion 240 for the specific wholesaler.

Next, the conversion portion 260 reads out the order information for the specific wholesaler from the order information storage portion 240 for the specific wholesaler. In addition, the conversion portion 260 read out printer control information corresponding to the order form from the printer control information storage portion 250. Based on the order information for the specific wholesaler and the printer control information, printer print information corresponding to the order form for the specific wholesaler is created. The created printer print information is stored in the printer print information storage portion 270.

Then, the printer print information stored in the printer print information storage portion 270, which corresponds to the order form of the specific wholesaler is sent to the client 420 through the Internet connection portion 210 along with identification information of the dedicated connection device 430, which is stored in the identification information storage portion 280 of the specific connection portion.

The description above is for the processing according to the first embodiment of the present invention. According to the second embodiment of the present invention, only address information of printer print information is sent to the client 420. The printer print information itself is downloaded from the WWW server 200 through the dedicated connection device 430 based on the address information.

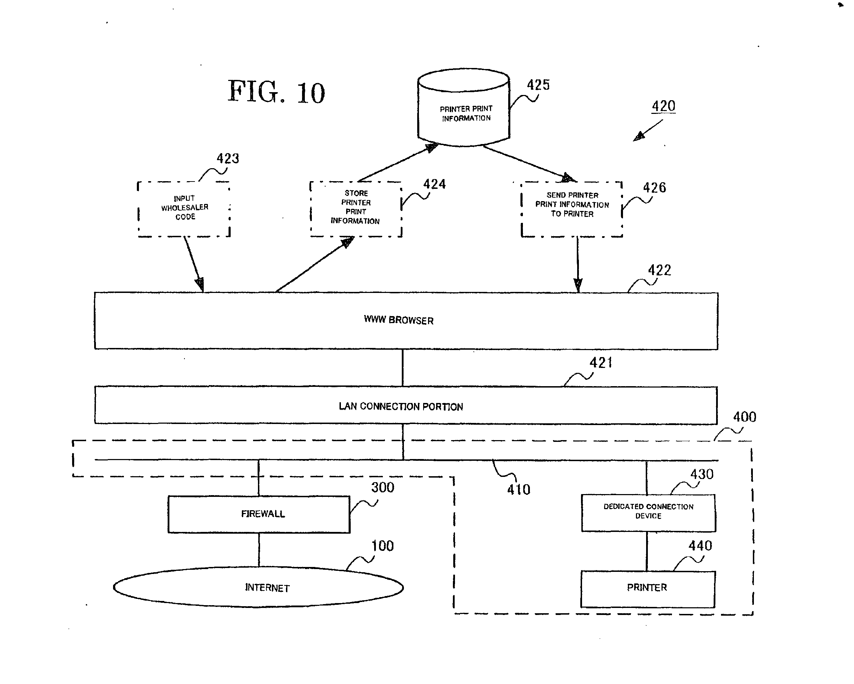

Fig. 10 is a diagram for explaining processing by the client 420 when an order form for a specific wholesaler is printed by the printer 440.

In Fig. 10, the client 420 connects to the LAN 410 including the intranet 400 connected to the Internet 100 through the firewall 300. The client 420 includes a LAN connection portion 421, a WWW browser 422, a wholesaler code input portion 423, a storage processing portion 424 for printer print information, a printer print information storage portion 425, and a transmission processing portion 426 for transmitting printer print information to a printer.

Here, steps by the wholesaler code input portion 423, the storage processing portion 424 for printer print information and professing portion 426 for transmitting printer print information to a printer are implemented on the WWW browser 422 under control of software sent from the WWW server 200 dynamically.

With this construction, a wholesaler code corresponding to a specific wholesaler is entered in the client 420 from the wholesaler code input portion 423 by using an input screen displayed on the WWW browser 422 in accordance with the software sent from the WWW server 200 dynamically.

Thus, the wholesale code is sent to the WWW browser 422, the LAN connection portion 421, the firewall 300, the Internet 100 and the WWW server 200 on the Internet 100 shown in Fig. 8.

As a result, printer print information corresponding to the order form for the specific wholesaler corresponding to the wholesaler code is sent from the WWW server 200 on the Internet 100 to the WWW browser 422 through the Internet 100, the firewall 300 and the LAN connection portion 421.

Then, the printer print information corresponding to the order form for the specific wholesaler is stored in the printer print information storage portion 425 through the processing by the storage processing portion 424 for printer print information.

After that, the printer print information corresponding to the order form for the specific wholesaler, which is stored in the printer print information storage portion 425 is sent to the printer 440 through the WWW browser 422, the LAN connection portion 421, the LAN 410, and the dedicated connection device 430 through the processing by the transmission processing portion 526 for transmitting printer print information to the printer.

The description above is also for processing according to the first embodiment of the present invention. According to the second embodiment of the present invention, only address information of printer print information is sent the client 420 first. The printer print information itself is downloaded from the WWW server 200 through the dedicated connection device 430 based on the address information.

With this construction, the printer print information corresponding to an order form for a specific wholesaler, which is sent from the WWW server 200 on the Internet 100, is sent to the printer 440 through the dedicated connection device 430 by using the WWW browser 422 of the client 420, which may provide advantages as follows:
1) printer print information from the WWW server 200 can be sent to the printer 440 without installing special software in the client 420. The processing in the client 420 uses the WWW browser 422, which does not limit a client OS.
2) Printer print information is sent to the printer 440 through the dedicated connection device 430 by using the client 420. Thus, printing with higher flexibility can be obtained by directly using a printing function of the WWW browser than that of printing by the printer 440. For example, a fixed form such as an order form can be printed finely.
3) Printer print information is sent from the WWW server 200 on the Internet 100 to the printer 440 through the dedicated connection device 430 by using the WWW browser 422 of the client 420. Thus, even when the firewall 300 is provided between the Internet 100 and the intranet 400, printer print information of the WWW server 200 of the Internet 100 can be printed by using the printer 440 of the intranet 400. The intranet 400 itself to which the printer 440 is connected is not open to public on the Internet 100. Therefore, the security of the intranet 400 can be ensured.

### Industrial Applicability

The present invention provides a print control method, a print control system, and a dedicated connection device, which can achieve the security of an intranet and which can produce a quality printout in a fixed form from a printer of the intranet by using Internet WWW.

According to the present invention, in order to print print information of a WWW server of the Internet by using a printer of an intranet connecting to the Internet through a firewall, the print information of the WWW server of the Internet is transferred to the printer of the intranet through a dedicated connection device by using a client of the intranet. Thus, the print information from the WWW server can be sent to the printer without installing special software in the client. In addition, the client OS is not limited.

Since printer print information is sent to a printer through a dedicated connection device, printing with higher flexibility can be performed than printing by using a printing function of a WWW browser directly. In addition, for example, printing on a fixed form such as an order form can be performed finely.

Even when the firewall is provided between the Internet and the intranet, printer print information of the WWW server of the Internet can be printed by using the printer of the intranet. The intranet itself to which the printer is connected is not open to public on the Internet. Therefore, the security of the intranet can be ensured.

## Claims

1. A print control method for printing print information of a WWW server of the Internet by using a printer of an intranet connected to the Internet through a firewall, comprising the steps of:
capturing print information of a WWW server of the Internet to a client of the intranet through the firewall; and
transferring the print information captured by the client to the printer of the intranet through a dedicated connection device.

2. A print control method according to Claim 1,
wherein the dedicated connection device captures the print information from the client by connecting to the client over the intranet and communicating with the client; and
the captured print information is command-converted by using command-conversion information stored in advance and is sent to the printer.

3. A print control method according to Claim 2,
wherein the dedicated connection device transfers the command-converted print information to the printer through a parallel port.

4. A print control method according to Claim 2,
wherein the dedicated connection device transfers the command-converted print information through a serial port.

5. A print control method according to Claim 1,
wherein the WWW server provides a WWW content to the client;
the client inputs a key item for searching a database of the WWW server by using the WWW server content provided from the WWW server and transfers the key item to the WWW server;
the WWW server searches the database of the WWW server based on the transferred key item and obtains desired information;
the WWW server combines the obtained information and printer control information stored in advance to create print information and transfers the print information to the client;
the client transfers print information transferred from the WWW server to the dedicated connection device; and
the dedicated connection device performs command-conversion processing on the print information and transfers it to the printer.

6. A print control method according to Claim 5,
wherein an input of the key item for searching the database of the WWW server in the client is authorized if a user ID and a keyword are properly input.

7. A print control method according to Claim 5,
wherein the WWW server supplies identification information of the dedicated connection device when transferring the print information to the client; and
the client transfers the print information transferred from the WWW server to the dedicated connection device based on the identification information of the dedicated connection device.

8. A print control method for printing print information of a WWW server of the Internet by using a printer of an intranet connected to the Internet through a firewall, comprising the steps of:
capturing address information of print information of a WWW server of the Internet to a client of the intranet through the firewall; and
notifying the address information of the print information captured to the client to a dedicated connection device,
wherein the dedicated connection device downloads the print information from the WWW server based on the address information of the print information notified by the client and transfers the print information to a printer of the intranet.

9. A print control method according to Claim 8,
wherein the dedicated connection device command-converts the print information downloaded from the WWW server by using command-conversion information stored in advance and transfers it to the printer.

10. A print control method according to Claim 9,
wherein the dedicated connection device transfers the command-converted print information through a parallel port.

11. A print control method according to Claim 9,
wherein the dedicated connection device transfers the command-converted print information through a serial port.

12. A print control method according to Claim 8,
wherein the WWW server provides a WWW content to the client;
the client inputs a key item for searching a database of the WWW server by using the WWW content provided from the WWW server and transfers the key item to the WWW server;
the WWW server searches the database of the WWW server based on the transferred key item and obtains desired information;
the WWW server combines the obtained information and printer control information stored in advance to create print information and transfers the address information of the print information to the client;
the client notifies the address information of the print information transferred from the WWW server to the dedicated connection device; and
the dedicated connection device downloads the print information from the WWW server based on the address information of the print information, which is notified from the client, performs command-conversion processing on the print information and transfers it to the printer.

13. A print control method according to Claim 12,
wherein an input of the key item for searching the database of the WWW server in the client is authorized if a user ID and a keyword are properly input.

14. A print control method according to Claim 12,
wherein the WWW server supplies identification information of the dedicated connection device when transferring the address information of the print information to the client; and
the client transfers the address information of the print information transferred from the WWW server to the dedicated connection device based on the identification information of the dedicated connection device.

15. A print control system for printing print information of a WWW server of the Internet by using a printer of an intranet connected to the Internet through a firewall, comprising:
a client connected to the intranet for capturing print information of the WWW server through the firewall; and
a dedicated connection device for transferring to the printer of the intranet the print information captured by the client.

16. A print control system according to Claim 15,
wherein the dedicated connection device has:
intranet connection means for connecting to the client over the intranet;
communication means for communicating with the client through the intranet connection means;
storage means for storing the print information transferred from the client;
command-conversion information storage means for storing command-conversion information for converting the command of the print information;
command-conversion processing means for converting the command of the print information by using the command-conversion information stored in the command-conversion information storage means; and
transfer means for transferring the print information command-converted by the command-conversion processing means to the printer.

17. A print control system according to Claim 16,
wherein the transfer means has a parallel port for transferring print information command-converted by the command-conversion processing means to the printer.

18. A print control system according to Claim 16,
wherein the transfer means has a serial port for transferring print information command-converted by the command-conversion processing means to the printer.

19. A print control system according to Claim 15,
wherein the client has:
key item input means for inputting a key item for searching a database of the WWW server by using a WW content provided from the WWW server;
key item transfer means for transferring the key item for searching the database of the WWW server input by the key item input means to the WWW server;
print information storage means for storing print information transferred from the WWW server; and
print information transfer means for transferring print information stored in the print information storage means to the dedicated connection device.

20. A print control system according to Claim 19,
wherein the key item input means authorizes an input of the key item if a user ID and a keyword are input properly.

21. A print control system according to Claim 19,
wherein the WWW server has:
content supply means for supplying a WWW content to the client;
a database for storing and managing desired information;
information searching means for searching the database based on a key item transferred from the client to obtain desired information;
information storage means for storing information searched and obtained by the information searching means;
printer control information storage means for storing predetermined printer control information in advance;
print information creating means for combining information stored in the information storage means and the printer control information stored in the printer control information storage means to create print information;
print information storage means for storing the print information created by the print information creating means; and
print information transfer means for transferring the print information stored in the print information storage means to the client.

22. A print control system according to Claim 21,
wherein the print information transfer means transfers identification information of the dedicated connection device to the client along with the print information.

23. A print control system for printing print information of a WWW server of the Internet by using a printer of an intranet connoted to the Internet through a firewall, comprising
a client connected to the intranet for capturing address information of the print information of the WWW server through the firewall; and
a dedicated connection device connected to the intranet for being notified the address information of the print information of the WWW server from the client, for downloading the print information from the WWW server based on the notified address information, and for transferring the print information to the printer.

24. A print control system according to Claim 23,
wherein the dedicated connection device has:
intranet connection means for connecting to the client through the intranet;
communication means for communicating with the client through the intranet connection means;
storage means for downloading and storing the print information from the WWW server based on the address information of the print information transferred from the client;
command-conversion information storage means for storing command-conversion information for converting a command of the print information;
command-conversion processing means for converting the command of the print information by using the command-conversion information stored in the command-conversion information storage means; and
transfer means for transferring the print information command-converted by the command-conversion processing means to the printer.

25. A print control system according to Claim 24,
wherein the transfer means has a parallel port for transferring the print information command-converted by the command-conversion processing means to the printer.

26. A print control system according to Claim 24,
wherein the transfer means has a serial port for transferring the print information command-converted by the command-conversion processing means to the printer.

27. A print control system according to Claim 24,
wherein the client has:
key item input means for inputting a key item for searching a database of the WWW server by using a WWW content provided from the WWW server;
key item transfer means for transferring the key item for searching the database of the WWW server, which is input by using the key item input means, to the WWW server;
address information storage means for storing address information of the print information transferred from the WWW server; and
notification means for notifying the address information stored in the address information storage means to the dedicated connection device.

28. A print control system according to Claim 27,
wherein the key item input means authorizes an input of the key item if a usr ID and a keyword are input properly.

29. A print control system according to Claim 27,
wherein the WWW server has:
content supply means for supplying a WWW content to the client;
a database for storing and managing desired information;
information search means for searching the database based on the key item transferred from the client and for obtaining desired information;
information storage means for storing information searched and obtained by the information search means;
printer control information storage means for storing predetermined printer control information in advance;
print information creating means for combining information stored in the information storage means and printer control information stored in the printer control information storage means to create print information;
print information storage means for storing print information created by the print information creating means; and
address information transfer means for transferring address information of the print information stored in the print information storage means to the client.

30. A print control system according to Claim 29,
wherein the address information transfer means transfers identification information of the dedicated connection device to the client along with the address information.

31. A dedicated connection device in a print control system for printing print information of a WWW server of the Internet by using a printer of an intranet connected to the Internet through a firewall, the apparatus comprising:
intranet connection means for connecting to the client over the intranet;
communication means for communicating with the client through the intranet connection means;
storage means for storing the print information transferred from the client;
command-conversion information storage means for storing command-conversion information for converting a command of the print information;
command-conversion processing means for converting the command of the print information by using command-conversion information stored in the command-conversion information storage means; and
transfer means for transferring print information command-converted by the command-conversion processing means to the printer.

32. A dedicated connection device according to Claim 31, wherein the transfer means has a parallel port for transferring the print information command-converted by the command-conversion processing means to the printer.

33. A dedicated connection device according to Claim 31, wherein the transfer means has a serial port for transferring the print information command-converted by the command-conversion processing means to the printer.

34. A dedicated connection device in a print control system for printing print information of a WWW server of the Internet by using a printer of an intranet connected to the Internet through a firewall, the apparatus comprising:
intranet connection means for connecting to the client through the intranet;
communication means for communicating with the client through the intranet connection means;
storage means for downloading and storing the print information from the WWW server based on address information of the print information transferred from the client;
command-conversion information storage means for storing command-conversion information for converting a command of the print information;
command-conversion processing means for converting the command of the print information by using the command-conversion information stored in the command-conversion information storage means; and
transfer means for transferring print information command-converted by the command-conversion processing means to the printer.

35. A dedicated connection device according to Claim 34, wherein the transfer means has a parallel port for transferring the print information command-converted by the command-conversion processing means to the printer.

36. A dedicated connection device according to Claim 34, wherein the transfer means has a serial port for transferring the print information command-converted by the command-conversion processing means to the printer.
